# EUROPÄISCHE PATENTSCHRIFT

(11) **EP 2 296 360 B1**
(45) Veröffentlichungstag und Bekanntmachung des Hinweises auf die Patenterteilung: **23.01.2013**
(21) Anmeldenummer: 09169881.1
(22) Anmeldetag: 09.09.2009
(51) Int. Cl.: H04N 1/00

(54) **Verfahren zum Gestalten und Generieren von Druckereierzeugnissen**
Method for designing and generating printed products
Procédé de conception et de génération de produits d'imprimerie

(43) Veröffentlichungstag der Anmeldung: 16.03.2011
(73) Patentinhaber: Karanga GmbH, 80797 München (DE)
(72) Erfinder: Schnagl, Christian, 82166 Gräfeling (DE)
(74) Vertreter: Schneider, Günther Martin

(56) Entgegenhaltungen:
- EP-A- 1 633 125
- WO-A-2007/016510
- WO-A-2007/035275
- US-A1- 2002 087 546
- US-A1- 2006 050 300
- US-A1- 2007 130 291
- US-A1- 2009 015 869
- US-A1- 2009 195 818

## Beschreibung

### GEBIET DER ERFINDUNG

Die Erfindung betrifft ein Verfahren zum Gestalten eines Druckereierzeugnisses aus einer Gestaltungsvorlage und einer Anzahl von Bildern an einer Medianeingabeeinrichtung, sowie ein Verfahren zum Generieren eines Druckereierzeugnisses aus einer Gestaltungsvorlage und einer Anzahl von Bildern an einer Medienerfassungseinrichtung.

### HINTERGRUND DER ERFINDUNG

Verfahren zum Gestalten bzw. Generieren von Druckereierzeugnissen aus einer Anzahl von Bildern und einer Vorlage sind aus dem Stand der Technik bekannt. So ist es beispielsweise bekannt, etwa ein Fotobuch oder einen Fotokalender am heimischen Computerarbeitsplatz zu gestalten und das fertig gestaltete Fotobuch bzw. den fertig gestalteten Fotokalender für den Druck an eine Druckerei, beispielsweise per E-Mail, zu senden.

Andere Lösungen stellen für die Gestaltung und das Generieren eines Fotobuches bzw. eines Fotokalenders Softwarepakete bereit, welche über das Internet auf den heimischen Computer geladen werden müssen. Die Softwarepakete bieten häufig eine große Anzahl verschiedener Vorlagen an, welche der Gestaltung des Kalenders und/oder des Fotobuches zugrunde gelegt werden können.

Die Dateigrößen der Softwarepakete und der Vorlagen liegen häufig zwischen mehreren Megabyte und mehreren 100 Megabyte. Ein Laden der Softwarepakete und der entsprechenden Vorlagen kann daher, abhängig von der Verbindungsgeschwindigkeit, bis zu einer Stunde oder sogar mehr betragen. Nach dem Laden der Softwarepakete und der entsprechenden Vorlagen ist es notwendig, die Softwarepakete auf dem heimischen Computer zu installieren, was meist nur mit entsprechenden Administratorrechten möglich ist. Der Einsatz solcher Softwarepakete ist daher in einem Unternehmensnetzwerk meist nicht möglich. Für das Laden der Softwarepakte und der Vorlagen sowie für die Installation derselben muss daher eine lange Zeit und Organisation eingeplant werden, bevor mit dem Gestalten bzw. dem Generieren etwa eines Fotobuches begonnen werden kann.

Mit dem so installierten Softwarepaket kann ein Benutzer nun ein Fotobuch und/oder ein Fotokalender gestalten. Hierbei kann ein Benutzer ein oder mehrere Bilder, welche lokal auf seinem Computer zur Verfügung stehen, in das Fotobuch/Fotokalender einfügen und gegebenenfalls die eingefügten Bilder mit einem Text versehen. Nachdem die Gestaltung des Fotobuches bzw. des Fotokalenders abgeschlossen ist, muss der Benutzer die Übertragung des fertigen Fotobuches bzw. des fertigen Fotokalenders an einen Dienstleister, welcher das Fotobuch bzw. den Fotokalender druckt, einleiten. Bevor das fertig gestaltete Fotobuch an den Dienstleister übertragen wird, werden die in das Fotobuch eingefügten Bilder in einer sogenannten Projektdatei zusammengefasst, welche sämtliche Informationen zur Gestaltung des Fotobuches enthält. Eine solche Projektdatei kann bei einem aufwendig gestalteten und mit vielen Bildern versehenden Fotobuch sehr groß werden, so dass alleine für die Übertragung der Projektdatei an den Dienstleister viel Zeit eingeplant werden muss.

Somit zerfällt der Prozess des Gestaltens derartiger Druckereierzeugnisse in drei zeitaufwendige Schritte, nämlich das Herunterladen und Installation einer Gestaltungssoftware, das Gestalten des Erzeugnisses und das Hochladen der Dateien mit den Bildern an den Server.

Aus der WO 2007/016510 A2 ist ein Verfahren zum Übertragen von Bildern von einem Client-Computer zu einem Server-Computer bekannt, um die übertragenen

Bilder auf dem Server-Computer in Verzeichnissen zu organisieren. Jedes Bild wird zweimal an den Server-Computer übertragen. Bei der ersten Übertragung wird das Bild in komprimierter Form übertragen, bei der zweiten Übertragung wird das Bild in nicht-komprimierter Form übertragen.

Aus der EP 1 633 125 A1 ist das Gestalten eines elektronischen Fotoalbums bekannt. An einem Benutzerrechner ist ein Bearbeitungsprogramm zum Bearbeiten des elektronischen Fotoalbums vorgesehen. Das elektronische Fotoalbum kann auf Grundlage einer Vorlage erstellt werden. Nach Abschluss der Bearbeitung werden auf dem Benutzerrechner Druckdaten erzeugt und an einen Server übertragen.

Aus der US 2006/0050300 A1 sind ein System und ein Verfahren zum Erzeugen von Fotoalben aus einer Vorlage und einer Anzahl von Bildern an einem Benutzerterminal bekannt. Die Lehre der US 2006/0050300 A1 sieht vor, eine Vorlage von einem Server auf das Benutzerterminal zu laden und dort mit Hilfe einer Bearbeitungssoftware eine Anzahl von Bildern in die Vorlage einzufügen. Nachdem die Gestaltung des Fotobuches abgeschlossen ist, kann der Benutzer einen Bestellprozess starten, bei dem die bearbeiteten Daten, d.h., die Vorlage und die in die Vorlage eingefügten Bilder auf den Server übertragen werden. Alternativ können zunächst die für die Gestaltung eines Fotoalbums notwendigen Bilder von dem Benutzerterminal an den Server übertragen werden, um anschließend einen Bearbeitungsprozess zu starten.

Ähnliche Lösungen sind aus dem Stand der Technik auch für die Gestaltung von Postern bzw. Tapeten bekannt. Ein Benutzer muss hier ebenfalls eine Software zur Gestaltung der Poster bzw. Tapeten auf seinen heimischen Computer laden. Hierbei zeigen sich im Wesentlichen die gleichen Probleme, wie sie bereits im Zusammenhang mit der Erstellung von Fotobüchern bzw. Fotokalendem beschrieben wurden.

US 2009/015869 betrifft ein Verfahren gemäß dem Oberbegriff des Anspruchs 1.

Für die Gestaltung eines Posters wird zwar meist nur ein einziges digitales Bild verwendet, welches allerdings aufgrund der Postergröße eine sehr hohe Auflösung aufweisen sollte und damit besonders speicherplatzintensiv ist. Das bedeutet, dass auch in diesem Falle die Übertragung des fertig gestalteten Posters bzw. einer fertig gestalteten Tapete viel Zeit in Anspruch nimmt.

### AUFGABE DER ERFINDUNG

Aufgabe der vorliegenden Erfindung ist es daher, ein Verfahren zum Gestalten bzw. zum Generieren eines Druckereierzeugnisses, und zwar eines Fotobuches, oder eines Fotokalenders bereitzustellen, mit welchem die Gesamtzeit für das Gestalten und das Übertragen des Druckereierzeugnisses, etwa ein Fotobuch erheblich verkürzt werden kann.

### ERFINDUNGSGEMÄßE LÖSUNG

Gelöst wird diese Aufgabe durch ein Verfahren zum Gestalten eines Druckereierzeugnisses aus einer Gestaltungsvorlage und einer Anzahl von Bildern, an einer Medieneingabeeinrichtung sowie ein Verfahren zum Generieren eines Druckereierzeugnisses aus einer Gestaltungsvorlage und einer Anzahl von Bildern an einer Medienerfassungseinrichtung gemäß den unabhängigen Ansprüchen Vorteilhafte Ausgestaltungen der Erfindung sind in den abhängigen Ansprüchen angegeben.

Demnach wird ein Verfahren zum Gestalten eines Druckereierzeugnisses aus einer Gestaltungsvorlage und einer Anzahl von Bildern, an einer Medieneingabeeinrichtung, welche über ein Kommunikationsnetzwerk mit einer Medienerfassungseinrichtung verbindbar ist, wobei die Gestaltungsvorlage eine Kalendervorlage oder eine Fotobuchvorlage ist, bereitgestellt, wobei zum Gestalten des Druckereierzeugnisses Bearbeitungsmittel vorgesehen sind, welche über das Kommunikationsnetzwerk von der Medieneingabeeinrichtung empfangbar sind, wobei die Bearbeitungsmittel angepasst sind, während zumindest einer Gestaltungsphase zumindest ein Bild aus der Anzahl von Bildern der Gestaltungsvorlage hinzuzufügen und während einer Datenübertragungsphase zumindest ein Bild zumindest teilweise von der Medieneingabeeinrichtung an die Medienerfassungseinrichtung zu übertragen, und wobei die Datenübertragungsphase vor Beenden der Gestaltungsphase gestartet wird und wobei die Gestaltungsphase und die Datenübertragungsphase im Wesentlichen parallel ablaufen.

Weil der Übertragungsprozess bereits vor dem Beenden der Gestaltungsphase gestartet wird, kann der Zeitraum, in welchem das Erzeugnis gestaltet wird, zumindest teilweise genutzt werden, um einen Teil oder alle Bilder, welche in der Gestaltungsvorlage verwendet werden, an die Medienerfassungseinrichtung zu übertragen. Zeitintensive Übertragungen, nachdem die Gestaltungsphase abgeschlossen ist, können so erheblich verkürzt werden, weil nur mehr in der Gestaltungsvorlage verwendete aber während der Gestaltungsphase noch nicht übertragene Bilder übertragen werden müssen.

Erfindungsgemäß wird eine Warteschlange erzeugt, welche die Anzahl von Bildern aufnimmt und wobei das zumindest eine während der Datenübertragungsphase zu übertragende Bild aus der Warteschlange ausgewählt wird.Den in die Warteschlange aufgenommenen Bildern wird eine Priorität zugeordnet, wobei aus der Warteschlange ein Bild aus den Bildern mit der höchsten Priorität ausgewählt wird.

Damit wird sichergestellt, dass die in einer Gestaltungsvorlage verwendeten bzw. eingefügten Bilder mit einer höheren Priorität an die Medienerfassungseinrichtung übertragen werden, als Bilder, welche nicht in die Gestaltungsvorlage eingefügt wurden. Das Übertragen nicht verwendeter Bilder wird so vermieden, was zu einer noch besseren Ausnutzung der Gestaltungsphase für die Datenübertragung führt. Ein Übertragen in der Gestaltungsvorlage nicht verwendeter Bilder kann vermieden werden, wenn diesen Bildern eine niedrigste Priorität zugeordnet wird, wobei Bilder mit einer niedrigsten Priorität nicht übertragen werden.

Erfindungsgemäß bewirkt Hinzufügen eines Bildes aus der Anzahl von Bildern zu der Gestaltungsvorlage eine Erhöhung der Priorität des hinzugefügten Bildes in der Warteschlange. Ein Entfernen eines Bildes aus der Gestaltungsvorlage kann ebenfalls eine Veränderung der Priorität des entfernten Bildes in der Warteschlange bewirken.

Weil sich die Warteschlange damit dynamisch an die Prioritäten der Bilder anpasst, wird in vorteilhafter Weise erreicht, dass während der Übertragungsphase immer die am höchsten priorisierten Bilder an die Medienerfassungseinrichtung übertragen werden.

Es hat sich als vorteilhaft herausgestellt, wenn bei einer Veränderung der Priorität eines Bildes in der Warteschlange die aktuelle Übertragung eines Bildes unterbrochen wird und die Datenübertragungsphase mit einem Bild aus der Warteschlange fortgesetzt wird, welches aus den Bildern mit der höchsten Priorität ausgewählt wird.

Die aktuelle Übertragung kann unterbrochen werden, sofern dem Bild in der Warteschlange aufgrund der Veränderung der Priorität des Bildes eine niedrigste Priorität zugeordnet ist und in der Warteschlange ein Bild mit einer höheren Priorität vorhanden ist.

Vorteilhaft ist es, wenn die unterbrochene Übertragung für ein Bild aus der Warteschlange wieder aufgenommen wird, wenn es aus der Warteschlange für die Übertragung ausgewählt wird.

Weil eine Veränderung der Priorität eines aktuell an die Medienerfassungseinrichtung übertragenen Bildes dazu führen kann, dass Bilder mit einer höheren Priorität in der Warteschlange vorhanden sind, wird mit einer Unterbrechung der aktuellen Übertragung gewährleistet, dass die Übertragung mit einem höher priorisierten Bild fortgesetzt wird. Mit der Wiederaufnahme der unterbrochenen Übertragung muss der bereits übertragene Teil des Bildes nicht noch einmal übertragen werden.

Für jedes zu übertragende Bild kann vor dem Übertragen eine Identifikation erzeugt werden, welche vor dem Übertragen des Bildes an die Medienerfassungseinrichtung zum Abfragen einer Statusinformation übertragen wird und wobei die Übertragung des Bildes in Abhängigkeit von der Statusinformation durchgeführt wird.

Die Identifikation kann ein aus dem Bild erzeugter Hashwert, vorzugsweise ein MD5-Hashwert sein.

Damit wird in vorteilhafter Weise vermieden, dass ein mehrfach in einer Gestaltungsvorlage verwendetes Bild oder ein in einer anderen Gestaltungsvorlage verwendetes Bild nochmals an die Medienerfassungseinrichtung übertragen wird.

Für jedes der Gestaltungsvorlage hinzugefügte Bild kann die Identifikation des Bildes mit der Gestaltungsvorlage verknüpft werden.

Die Datenübertragungsphase kann eine Phase zum Übertragen der Gestaltungsvorlage zusammen mit den verknüpften Identifikationen umfassen, wobei während der Gestaltungsphase vorgenommene Änderungen an den der Gestaltungsvorlage hinzugefügten Bildern zusammen mit der Gestaltungsvorlage von der Medieneingabeeinrichtung an die Medienerfassungseinrichtung übertragen werden.

Weil in der Gestaltungsvorlage keine Bilder gespeichert werden, kann die Übertragungszeit für das Übertragen der Gestaltungsvorlage bzw. der Verknüpfungsinformation und/oder der vorgenommenen Änderungen besonders stark reduziert werden.

Ferner wird ein Verfahren zum Generieren eines Druckereierzeugnisses aus einer Gestaltungsvorlage und einer Anzahl von Bildern, an einer Medienerfassungseinrichtung, welche über ein Kommunikationsnetzwerk mit einer Medieneingabeeinrichtung verbindbar ist, bereitgestellt, wobei die Bilder und die Gestaltungsvorlage oder eine Identifikation der Gestaltungsvorlage von der Medieneingabeeinrichtung empfangen werden, wobei für jedes empfangene Bild eine Identifikation, vorzugsweise ein Hashwert erzeugt wird, wobei der empfangenen Gestaltungsvorlage zumindest eine Identifikation eines Bildes zugeordnet ist, wobei über die zumindest eine zugeordnete Identifikation ein Bild in die Gestaltungsvorlage eingefügt wird, und wobei Mittel bereit gestellt werden, um von der Medieneingabeeinrichtung zumindest eine Identifikation eines Bildes zu empfangen und eine Statusinformation zu der empfangenen Identifikation an die Medieneingabeeinrichtung zu übertragen, und wobei Bearbeitungsmittel bereit gestellt werden, welche an die Medieneingabeeinrichtung übertragbar sind und welche ausgestaltet sind, auf der Medieneingabeeinrichtung das erfindungsgemäße Verfahren zum Gestalten eines Druckereierzeugnisses auszuführen.

Das Druckereierzeugnis kann an eine Produktionseinrichtung übertragen werden.

Zudem wird ein Computerprogrammprodukt mit Programmcode bereitgestellt, welcher, wenn in eine Datenverarbeitungsanlage geladen, das erfindungsgemäße Verfahren zum Gestalten eines Druckereierzeugnisses und/oder das erfindungsgemäße Verfahren zum Generieren eines Druckereierzeugnisses zur Ausführung bringt.

Software-Komponenten, mit welchen das erfindungsgemäße Verfahren zum Gestalten eines Druckereierzeugnisses und/oder das erfindungsgemäße Verfahren zum Generieren eines Druckereierzeugnisses implementiert werden, können in Form elektrischer Signale über ein Kommunikationsnetz in die Datenverarbeitungsanlage geladen und zur Ausführung gebracht werden.

### KURZBESCHREIBUNG DER FIGUREN

Weitere Einzelheiten und Merkmal der Erfindung ergeben sich aus der nachfolgenden Beschreibung in Verbindung mit der Zeichnung. Es zeigt
- Fig. 1: eine mögliche Architektur eines Netzwerkes, welches vorgesehen ist, das erfindungsgemäße Verfahren zum Gestalten bzw. Generieren eines Druckereierzeugnisses auszuführen; die wesentlichen Schritte des erfindungsgemäßen Verfahrens unter Verwendung der beispielhaften Netzwerkarchitektur sind hierbei ebenfalls ersichtlich;
- Fig. 2: den Ablauf eines Prozesses, welcher ein Gestalten und ein Übertragen umfasst, über die Zeit;
- Fig. 3: ein Ablaufdiagramm eines möglichen Ablaufes des erfindungsgemäßen Verfahrens;
- Fig. 4: eine Warteschlange für das Einreihen von zu übertragenden Bildern so- wie beispielhaft die Anpassung der Warteschlange bei Einfügen eines Bildes in eine Vorlage bzw. bei Entfernen eines Bildes aus der Vorlage; und
- Fig. 5: ein Ablaufdiagramm eines möglichen Ablaufes des erfindungsgemäßen Verfahrens auf einer Servereinrichtung.

### AUSFÜHRUNGSBEISPIELE

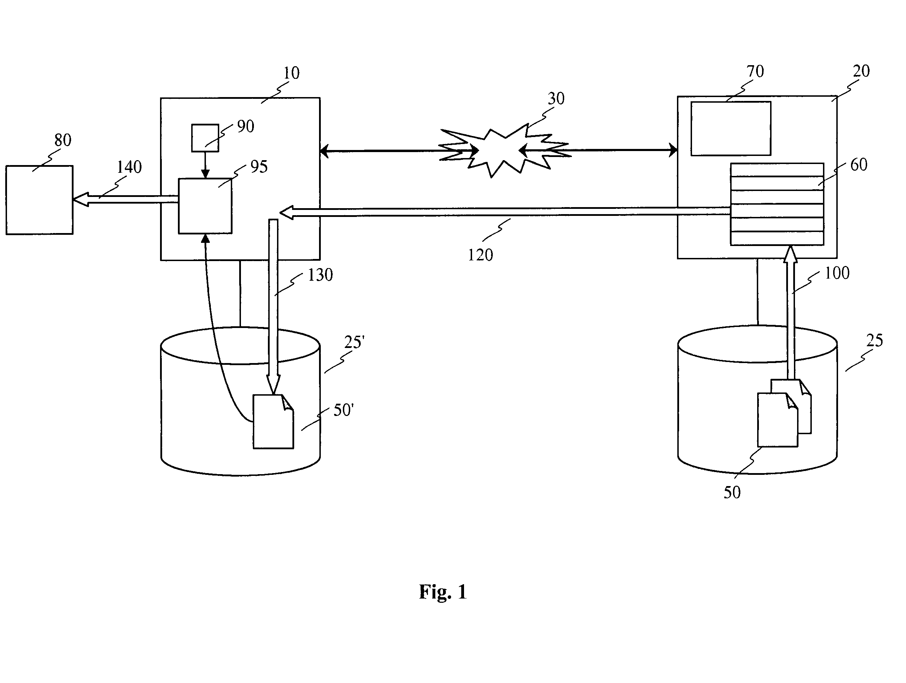

**Fig. 1** zeigt exemplarisch eine Netzwerkarchitektur, welche für die Ausführung eines erfindungsgemäßen Verfahrens zum Gestalten bzw. zum Generieren eines Druckereierzeugnisses geeignet ist. Eine Medienerfassungseinrichtung 10, beispielsweise ein Server, ist über ein Kommunikationsnetwerk 30, beispielsweise das Internet mit einer Medieneingabeeinrichtung 20, beispielsweise einem Computer, verbunden. Die Medieneingabeeinrichtung 20 kann aber auch ein mobiles Endgerät, ein PDA oder ein Mobiltelefon sein, welche für die Gestaltung eines Druckereierzeugnisses geeignet sind.

Der Computer 20 ist mit einer Speichereinrichtung 25 verbunden. Die Speichereinrichtung 25 kann beispielsweise eine Festplatte, ein optisches Speichermedium oder ein Flash-Speicher sein. Auf der Speichereinrichtung 25 sind eine Anzahl von Bildern 50 abgelegt, welche zur Gestaltung des Druckereierzeugnisses auf dem Computer 20 verwendet werden können.

Der Server 10 ist ebenfalls mit einer Speichereinrichtung 25 verbunden, welche vorgesehen ist, die nach dem erfindungsgemäßen Verfahren übertragenen Bilder 50' zur weiteren Verarbeitung abzuspeichern. Die Speichereinrichtung 25' kann beispielsweise durch eine oder mehrere Festplatten der Servereinrichtung 10 gebildet werden. Alternativ kann die Speichereinrichtung 25' auch von einem Plattensubsystem gebildet werden, welches mit der Servereinrichtung 10 gekoppelt ist. An der Stelle eines einzelnen Servers 10 können auch mehrere Server 10 vorgesehen sein, welche jeweils auf die Speichereinrichtung 25 Zugriff haben.

Über das Kommunikationsnetzwerk 30 können mehrere Computer 20 gleichzeitig mit einer oder mehreren Servereinrichtungen 10 gekoppelt sein.

Vorzugsweise ist die Servereinrichtung 10 mit einer Produktionseinrichtung 80 verbindbar, um druckbereite Produktionsdaten des Druckereierzeugnisses an die Produktionseinrichtung 80 zu übertragen. Die Produktionsdaten können dabei in Abhängigkeit von dem in der Produktionseinrichtung verwendeten Druckverfahren entsprechend aufbereitet werden.

Die Servereinrichtung 10 stellt Bearbeitungsmittel bereit, welche über das Kommunikationsnetzwerk 30 an den Computer 20 übertragbar sind und dort zur Anzeige gebracht werden können. Die Bearbeitungsmittel 70 stellen sämtliche notwendigen Funktionen zur Verfügung, um ein Druckereierzeugnis, und zwar ein Fotobuch oder einen Fotokalender auf dem Computer 20 zu gestalten. Vorzugsweise wird das Bearbeitungsmittel 70 durch eine HTML-Anwendung, ein Java-Applet oder eine Flash-Anwendung gebildet, welche in einem Internetbrowser auf dem Computer 20 dargestellt werden, bzw. ausgeführt werden können.

Damit wird gewährleistet, dass zum Zeitpunkt der Gestaltung eines Druckereierzeugnisses immer die aktuelle Version des Bearbeitungsmittels 70' verwendet wird. Der wichtigste Vorteil kann aber darin gesehen werden, dass ein Laden des gesamten für die Gestaltung eines Druckereierzeugnisses notwendigen Bearbeitungsmittels 70 auf den Computer 20 und die Installation des Bearbeitungsmittel 70 auf den Computer 20 entfällt, da immer nur jene Teile der Bearbeitungsmittel 20 geladen bzw. zur Anzeige gebracht werden, welche für den aktuellen Bearbeitungsschritt notwendig sind.

Nachdem ein Anwender die Bearbeitungsmittel 70 in einem Internetbrowser des Computers 20 zur Ansicht bzw. zur Ausführung gebracht hat, kann dieser einen Speicherort auf dem Computer 20 auswählen, in welchem sich eine Anzahl von Bildern befinden, welche für die Gestaltung, etwa eines Fotobuches verwendet werden sollen. Nach Auswahl eines Speicherortes, beispielsweise ein Dateiordner in welchem sich die Bilder 50 befinden, erzeugt das Bearbeitungsmittel 70 eine Warteschlange 60 und fügt die Bilder 50 des ausgewählten Speicherortes in die Warteschlange 60 ein. In Fig. 1 ist dieser Vorgang mit Bezugszeichen 100 benannt.

Nachdem sämtliche sich in dem ausgewählten Speicherort befindlichen Bilder 50 in die Warteschlange 60 eingefügt worden sind oder nachdem das erste Bild 50 in die Warteschlange 60 eingefügt worden ist, startet das Bearbeitungsmittel 70 einen Datenübertragungsprozess, um die Bilder aus der Warteschlange 60 an die Servereinrichtung 10 zu übertragen. Der Übertragungsvorgang ist in Fig. 1 mit dem Bezugszeichen 120 benannt.

Während des Übertragungsvorganges 120, in welchem die Bilder an die Servereinrichtung 10 übertragen werden, kann ein Anwender unter Verwendung der Bearbeitungsmittel 70 etwa ein Fotobuch gestalten, indem er eine Anzahl von Bildern zu einer Fotobuchvorlage hinzufügt. Der Gestaltungsprozess und der Übertragungsprozess der Bilder laufen dabei im Wesentlichen parallel bzw. quasiparallel ab, d.h. dass während einer Gestaltungsphase, in welcher das Druckereierzeugnis gestaltet wird, bereits Bilder von dem Computer 20 an die Servereinrichtung 10 übertragen werden. Die Bilder aus der Warteschlange 60 können dabei entweder sequentiell oder parallel übertragen werden.

Weil die Bearbeitungsphase und die Übertragungsphase im Wesentlichen gleichzeitig ablaufen, kann gewährleistet werden, dass bei Beenden des Gestaltungsprozesses mindestens ein Teil der in der Vorlage verwendeten Bilder bereits an die Servereinrichtung 10 übertragen worden ist. Die Zeit, welche zur Datenübertragung nach dem Beenden der Gestaltungsphase notwendig ist kann so drastisch reduziert werden. Im besten Fall ist die Datenübertragungsphase, in welcher die Bilder aus der Warteschlange 60 übertragen werden, bereits abgeschlossen, wenn die Gestaltungsphase beendet wird. Damit muss nur noch die Fotobuchvorlage mit den Informationen, welche Bilder an welcher Stelle in dem Fotobuch einzufügen sind, an die Servereinrichtung 10 übertragen werden.

An der Servereinrichtung 10 wird aus den übertragenen Bildern 50' und der Vorlage 90 das entsprechende Druckereierzeugnis 95 zusammengefügt und in ein für die Produktionseinrichtung 80 geeignetes Format gebracht. Im Anschluss daran kann das fertige Druckereierzeugnis an die Produktionsreinrichtung 80 übergeben werden. Diese Übergabe ist in Fig. 1 mit Bezugszeichen 140 benannt.

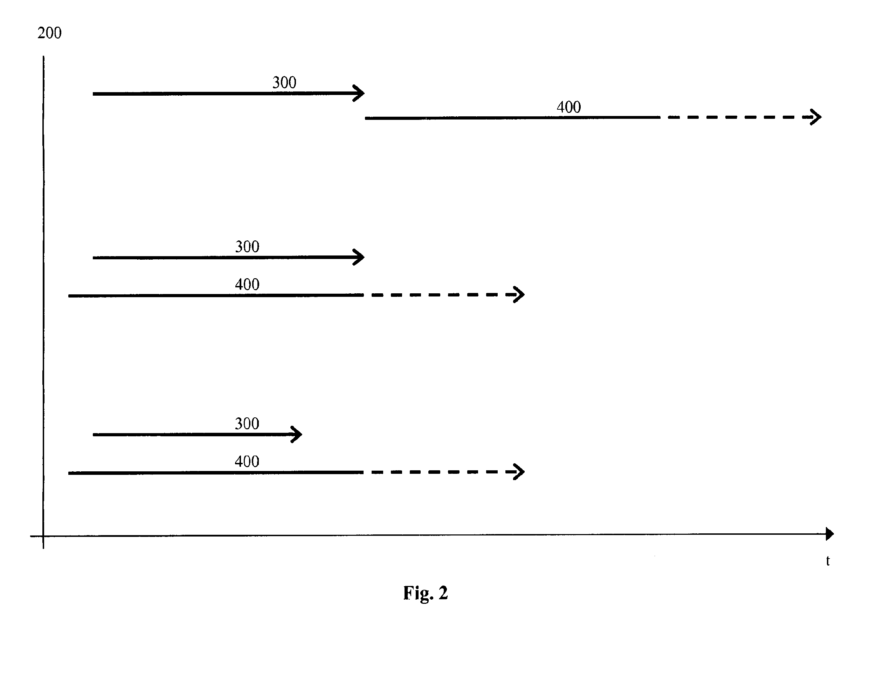

**Fig. 2** zeigt den Ablauf eines Verfahrens über die Zeit. Zum Zeitpunkt 200 wird ein Bearbeitungsmittel auf der Medieneingabeeinrichtung zur Ausführung gebracht, was beispielsweise durch Laden von einer Servereinrichtung erfolgen kann. Im Anschluss daran kann ein Anwender die für die Gestaltung vorgesehenen Bilder auswählen. Die Gestaltungsphasen sind mit 300, die Übertragungsphasen sind mit 400 benannt.

Mit beiden oberen Pfeilen in Fig. 2 wird der zeitliche Ablauf für ein Verfahren gezeigt, bei dem der Übertragungsprozess 400 erst nach der Gestaltungsphase 300 beginnt, sodass der gesamte Prozess des Gestaltens und Übertragens wesentlich länger dauert als nach unten gezeigten Verfahren (vgl. Fig. 2, Mitte und unten).

Die beiden Pfeile in der Mitte der Fig. 2 und die beiden Pfeile in Fig. 2 unten zeigen jeweils einen zeitlichen Ablauf nach dem Verfahren gemäß dem Oberbegriff des Anspruchs 1.

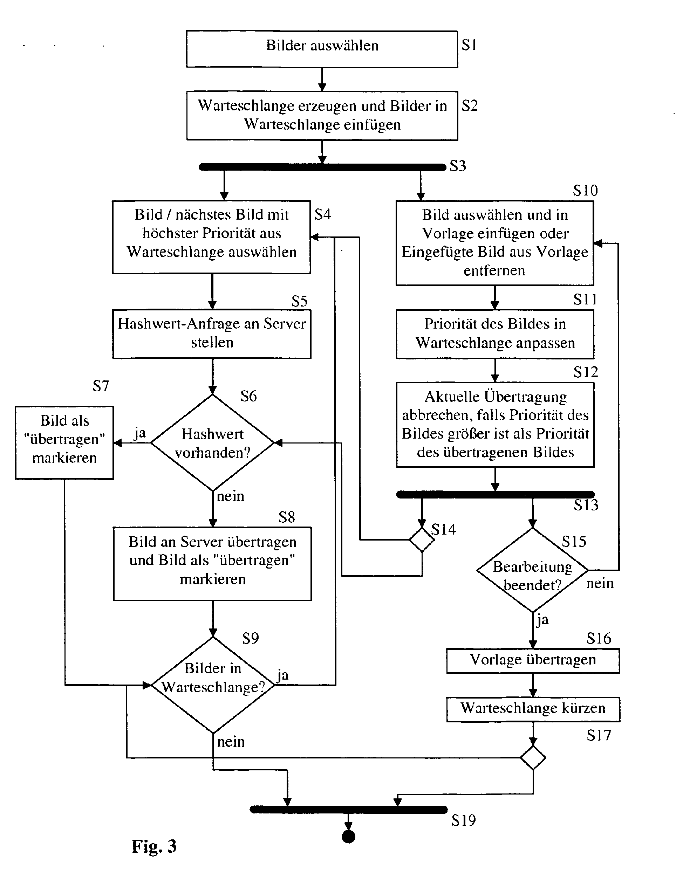

Nach der Auswahl der Bilder startet der Prozess 400 zur Übertragung der Bilder auf die Medienerfassungseinrichtung. Parallel hierzu kann der Anwender in einer Gestaltungsphase 300 etwa ein Fotobuch gestalten, indem er Bilder dem Fotobuch hinzufügt. Die Übertragung der Bilder in dem Prozess 400 wird dann entsprechend der in das Fotobuch eingefügten Bilder angepasst, wie es mit Bezug auf Fig. 3 näher beschrieben wird.

Der parallel zur Gestaltungsphase 300 ausgeführte Übertragungsprozess 400 kann länger dauern als die Gestaltungsphase selbst, was von der Anzahl und der Größe der zu übertragenen Bilder abhängt. Der Übertragungsprozess 400 kann aber auch schon beendet sein, bevor die Gestaltungsphase 300 abgeschlossen ist. Dies wird in Fig. 2 mit dem teilweise gestrichelt ausgeführten Pfeil 400 verdeutlicht.

Wie aus Fig. 2 Mitte und unten ersichtlich ist, wird mit dem Verfahren die Gestaltungsphase 300 genutzt, um parallel zur Gestaltungsphase 300 bereits Bilder an die Medienerfassungseinrichtung zu übertragen, was die Übertragungszeit nach Beenden der Gestaltungsphase 300 deutlich verkürzen kann.

Die Gestaltungsphase selbst kann verkürzt werden (Fig. 2, unten), indem etwa Mittel bereit gestellt werden, um eine Anzahl von Bildern automatisch in eine Fotobuchvorlage einzufügen.

Aus Fig. 2 wird ersichtlich, dass also die gesamte Zeit für das Gestalten und Übertragen eines Fotobuches mit dem Verfahren gemäß dem Oberbegriff des Anspruchs 1 deutlich gegenüber dem Zeitbedarf anderer bekannter Verfahren verringert werden kann.

**Fig. 3** zeigt einen möglichen Ablauf des erfindungsgemäßen Verfahrens zum Gestalten eines Druckereierzeugnisses in Form eines Ablaufdiagramms.

In einem ersten Schritt S1 wählt der Benutzer eine Anzahl von Bildern aus, welche für die Gestaltung beispielsweise eines Fotobuches verwendet werden sollen. Hierzu kann der Anwender etwa einen Dateiordner angeben, in welchem die zu verwendenden Bilder abgelegt sind. Der Dateiordner kann auch weitere Bilder oder andere Dateien enthalten, welche tatsächlich nicht für die Gestaltung verwendet werden. Alternativ können auch mehrere Ordner angegeben werden oder einzelne Bilder aus unterschiedlichen Ordnern ausgewählt werden.

Nach Auswahl der zu verwendenden Bilder bzw. des Ordners, welcher die Bilder enthält, wird in einem nächsten Schritt S2 eine Warteschlange erzeugt, in welche die ausgewählten Bilder eingefügt werden. Für jedes in die Warteschlange eingefügte Bild wird eine Identifikation erzeugt, welche geeignet ist das jeweilige Bild eindeutig zu identifizieren. Vorzugsweise wird zur Identifikation eines Bildes ein Hashwert aus dem Bild berechnet, welcher beispielsweise mittels einer MD5-Hashfunktion erzeugt werden kann. Zusätzlich wird in der Warteschlange für jedes Bild eine Priorität abgespeichert, welche vorgesehen ist, die Reihenfolge der an die Servereinrichtung 10 zu übertragenden Bilder festzulegen. Die in dem Schritt S2 in die Warteschlange eingefügten Bilder haben alle dieselbe Priorität.

Nachdem die Bilder in die Warteschlange eingefügt wurden und für jedes Bild ein entsprechender Hashwert berechnet und die Prioritäten festgelegt wurden, wird in dem nächsten Schritt S3 das erfindungsgemäße Verfahren parallel fortgesetzt, d.h. der Schritt S4 und der Schritt S10 kommen parallel bzw. quasi parallel zur Ausführung.

Die Schritte S4 bis S9, welche parallel zu den Schritten S10 bis S17 ausgeführt werden, sind dazu vorgesehen, die in der Warteschlange eingefügten Bilder gemäß ihrer Priorität an die Servereinrichtung 10 zu übertragen. Der durch die Schritte S4 bis S9 gebildete Übertragungsprozess startet unmittelbar nachdem die Warteschlange erzeugt worden ist, also direkt nachdem ein Anwender einen Dateiordner, welcher die zu verwendenden Bilder enthält, ausgewählt hat.

In dem Schritt S4 wird zunächst ein Bild mit der höchsten Priorität aus der Warteschlange ausgewählt, wobei bei der ersten Auswahl eines Bildes aus der Warteschlange ein beliebiges Bild ausgewählt werden kann, da nach dem Erzeugen der Warteschlange alle Bilder in der Warteschlange die gleiche Priorität haben. Alternativ kann die Reihenfolge der Auswahl der Reihenfolge der Bilder in dem Dateiordner entsprechen. Zu dem ausgewählten Bild wird im nächsten Schritt S5 der Hashwert des Bildes aus der Warteschlange gelesen bzw. ein Hashwert berechnet und an den Server eine Hashwertanfrage gestellt. Die Hashwertanfrage hat den Zweck zu ermitteln, ob das aus der Warteschlange ausgewählte Bild bereits auf der Servereinrichtung vorhanden ist, etwa wenn das Bild bereits zu einem früheren Zeitpunkt an die Servereinrichtung übermittelt worden ist.

Ergibt die Hashwertanfrage, dass das ausgewählte Bild bereits auf der Servereinrichtung vorhanden ist, was im Schritt S6 geprüft wird, verzweigt der durch die Schritte S4 bis S9 gebildete Prozessablauf zu dem Schritt S7, in welchem das Bild in der Warteschlange als "übertragen" markiert wird. Anschließend setzt der Übertragungsprozesse seine Verarbeitung mit der Schritt S9 fort und wählt das nächste Bild mit der höchsten Priorität aus der Warteschlange aus.

Wird in dem Schritt S6 ermittelt, dass das ausgewählte Bild noch nicht an die Servereinrichtung übertragen worden ist, verzweigt der Prozess zu dem Schritt S8, in welchem das ausgewählte Bild an die Servereinrichtung übertragen wird. Nach Übertragen des Bildes an die Servereinrichtung wird das Bild ebenfalls als "übertragen" markiert.

Im Anschluss daran prüft der Prozess in dem Schritt S9, ob weitere zu übertragende Bilder in der Warteschlange vorhanden sind. Ergibt diese Prüfung, dass weitere Bilder vorhanden sind, verzweigt der Prozess wieder zurück zu dem Schritt S4 und wählt das nächste Bild mit der höchsten Priorität aus der Warteschlange und führt für dieses wiederum die Schritte S5 - S8 aus. Sind keine weiteren Bilder mehr in der Warteschlange vorhanden, wird der Übertragungsprozess beendet, S 19.

Parallel zu dem Übertragungsprozess werden an dem Computer 20 mithilfe der Bearbeitungsmittel 70 die Schritte S10 bis S17 ausgeführt bzw. zur Ausführung gebracht.

In dem Schritt S10 wird ein Bild aus den in dem Schritt S1 ausgewählten Bildern ausgewählt und in die Vorlage, beispielsweise eine Kalendervorlage eingefügt. In dem Bearbeitungsschritt 10 kann aber auch ein bereits in eine Vorlage eingefügtes Bild wieder aus der Vorlage entfernt werden. Neben dem Einfügen eines Bildes in die Vorlage und/oder dem Entfernen eines Bildes in die Vorlage können die eingefügten Bilder entsprechend der persönlichen Gestaltungswünsche angepasst bzw. bearbeitet werden. Beispielsweise können die eingefügten Bilder in ihrer Größe oder in ihrer Ausrichtung angepasst werden. Für jedes Bild kann eine Bild-überschrift und/oder eine Bildunterschrift hinzugefügt werden.

Das Bearbeitungsmittel 70 kann auch vorsehen, dass eine Anzahl von Bildern gleichzeitig in die Vorlage eingefügt werden und die eingefügten Bilder von dem Bearbeitungsmittel 70 automatisch auf die in der Vorlage vorhandenen Platzhalter verteilt werden. Damit kann die Gestaltungsphase selbst erheblich verkürzt werden. Auch beim automatischen Einfügen von Bildern in die Vorlage wird der Übertragungsprozess bereits gestartet, noch bevor die Gestaltung des Druckereierzeugnisses endgültig abgeschlossen ist.

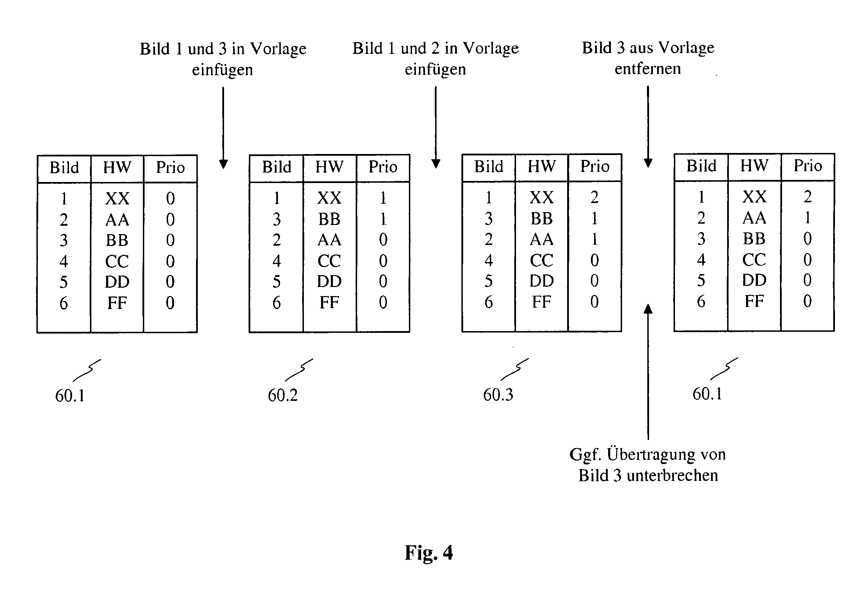

Nachdem ein Bild in die Vorlage eingefügt bzw. ein Bild aus der Vorlage entfernt wurde, veranlasst das Bearbeitungsmittel 70 in dem nächsten Schritt S11, dass die Priorität des jeweiligen Bildes in der Warteschlange angepasst wird. Ein der Vorlage hinzugefügtes Bild erhält also eine höhere Priorität, während ein aus der Vorlage entferntes Bild eine niedrigere Priorität erhält. Das Anpassen von Prioritäten von hinzugefügten bzw. entfernten Bildern wird mit Bezug auf Fig. 4 näher beschrieben.

In dem nächsten Schritt S 12 prüft das Bearbeitungsmittel 70, ob die Priorität des aktuellen von dem Datenübertragungsprozess S4 bis S9 an die Servereinrichtung übertragenen Bildes kleiner als die Priorität des soeben zur Vorlage hinzugefügten Bildes ist bzw. aus der Vorlage entfernten Bildes ist. Ist dies der Fall, wird die aktuelle Übertragung des Bildes abgebrochen, um zu gewährleisten, dass nach dem Hinzufügen eines Bildes bzw. nach dem Entfernen eines Bildes die Prioritäten, mit welcher die Bilder an die Servereinrichtung übertragen werden, wieder in die richtige Reihenfolge gebracht werden. Alternativ kann die Übertragung des aktuell übertragenen Bildes auch abgeschlossen werden, bevor mit der Übertragung des nächsten Bildes begonnen wird.

Hierzu kommen die dem Schritt S13 nachfolgenden Schritte S14 und S15 wieder parallel zur Ausführung, so dass parallel zum Bearbeitungsvorgang in den Datenübertragungsprozess eingegriffen werden kann, um den Datenübertragungsprozess entsprechend den neuen Prioritäten der Bilder in der Warteschlange anzupassen. Die Anpassung des Datenübertragungsprozesses kann etwa dadurch erfolgen, dass zu dem eingefügten bzw. entfernten Bild aus der Vorlage als nächstes zu dem Schritt S6 des Datenübertragungsprozesses verzweigt wird, um zu prüfen, ob das eingefügte bzw. entfernte Bild bereits auf der Servereinrichtung vorhanden ist. Alternativ kann dadurch in den Datenübertragungsprozess eingegriffen werden, dass als nächstes zu dem Schritt S4 des Datenübertragungsprozesses verzweigt wird, in welchem das nächste Bild mit der höchsten Priorität aus der Warteschlange ausgewählt wird. Diese beiden Alternativen sind in Fig. 3 mit den Bezugszeichen S14 benannt. Mit der zweiten Alternative wird gewährleistet, dass auch nach dem Hinzufügen bzw. nach dem Entfernen eines Bildes immer das Bild mit der höchsten Priorität aus der Warteschlange an die Servereinrichtung übertragen wird.

In dem parallel zu dem Schritt S14 zur Ausführung gelangten Schritt S15 wird geprüft, ob die Gestaltung bzw. die Bearbeitung des Druckereierzeugnisses beendet ist. Ist dies nicht der Fall, kann in dem Schritt S10 ein weiteres Bild ausgewählt werden und der Vorlage hinzugefügt werden bzw. ein Bild aus der Vorlage entfernt werden.

Ist die Bearbeitung beendet, kann in einem nächsten Schritt S 16 die Vorlage an die Servereinrichtung übertragen werden. Die übertragene Vorlage enthält sämtliche Informationen, welche von der Servereinrichtung 10 benötigt werden, um ein druckfertiges Druckereierzeugnis aus der Vorlage und den übertragenen Bildern herzustellen.

Nach dem Übertragen der Vorlage an die Servereinrichtung kann die Warteschlange in einem nächsten Schritt S17 gekürzt werden, so dass sich nur noch jene Bilder in der Warteschlange befinden, welche in die Vorlage eingefügt wurden und durch den Datenübertragungsprozess noch nicht an die Servereinrichtung übertragen wurden. Die Schritte S16 und S17 können auch in umgekehrter Reihenfolge zur Ausführung gebracht werden.

Da in den meisten Fällen der Gestaltungsprozess länger dauert als die Übertragung der in die Vorlage eingefügten Bilder, ist der gesamte Prozess des Gestaltens eines Druckerzeugnisses bereits mit Übertragen der Vorlage an die Servereinrichtung abgeschlossen. Der Benutzer kann dann unmittelbar nach dem Gestalten des Druckereierzeugnisses den Druck in Auftrag geben, ohne dass er zusätzlich die Übertragung sämtlicher Bilder, welche in eine Vorlage eingefügt wurden, abwarten müsste, wie es bei den Verfahren im Stand der Technik üblich ist.

Weil die in die Vorlage eingefügten Bilder teilweise oder vollständig bereits von den Übertragungsprozess S4 bis S9 an die Servereinrichtung übertragen wurden, müssen zu der Vorlage nur mehr jene Informationen an die Servereinrichtung übertragen werden, welche zum Erzeugen eines druckreifen Druckereierzeugnisses notwendig sind. Beispielsweise können in der Vorlage eine Anzahl von Referenzen vorgesehen sein, welche eindeutig kennzeichnen, welches Bild an welcher Position, etwa in einem Fotobuch angeordnet ist. Als Referenzen können hierzu die in dem Schritt S2 erzeugten und in der Warteschlange abgelegten Hashwerte der jeweils eingefügten Bilder verwendet werden. Mithilfe dieser Hashwerte kann die Servereinrichtung die entsprechenden Bilder 50' mit der Vorlage zusammenführen und ein druckfertiges Druckereierzeugnis erzeugen. Zusätzlich zu den Hashwerten der Vorlage können auch weitere für die Fertigstellung des Druckerzeugnisses auf dem Server relevanten Informationen übertragen werden, beispielsweise die Größe, die Auflösung, eine Ausschnittsinformation und/oder Orientierung eines Bildes.

In einer besonders vorteilhaften Ausführungsform des erfindungsgemäßen Verfahrens kann bei einem durch den Schritt S12 veranlassten Abbruch des Übertragungsprozesses eines Bildes die Übertragung des restlichen Bildes wieder aufgenommen werden, sobald dieses Bild aufgrund seiner Priorität in dem Schritt S4 wieder aus der Warteschlange ausgewählt wird. Um eine Wiederaufnahme der Übertragung zu gewährleisten, kann beispielsweise für dieses Bild in der Warteschlange ein Status "teilweise übertragen" markiert werden. In dem Schritt S5, in welchem eine Hashwertanfrage an den Server gerichtet wird, kann zusätzlich vom Server angefragt werden, wie viel des teilweisen übertragenen Bildes bereits auf der Servereinrichtung gespeichert wurde. Der Datenübertragungsprozess kann dann die Übertragung für den restlichen Teil des Bildes fortsetzen. Damit kann effizient verhindert werden, dass ein Bild, welches aufgrund einer sich ändernden Priorität eines anderen Bildes in der Warteschlange nur teilweise übertragen wurde, nochmals vollständig übertragen werden muss. Das Vorsehen des teilweise Übertragens eines Bildes sowie der Wiederaufnahme eines Übertragungsvorgangs für ein Bild ist vorteilhaft, wenn ein Anwender eine Anzahl von Bildern häufig der Vorlage hinzufügt bzw. häufig aus der Vorlage entfernt, wobei die Wahrscheinlichkeit eines Abbruches eines aktuellen Übertragungsvorganges mit zunehmender Dateigröße der zu übertragenen Bilder zunimmt. Damit kann effizient verhindert werden, dass trotz des zum Gestaltungsprozess parallelen Datenübertragungsprozess sämtliche in der Vorlage eingefügten Bilder erst nach dem Beenden der Bearbeitung an die Servereinrichtung übertragen werden.

Ein Abbruch eines aktuell übertragenen Bildes kann dadurch verhindert werden, dass in dem Schritt S12 alternativ zur der oben genannten Bedingung die Übertragung nur dann abgebrochen wird, wenn ein aus der Vorlage entferntes Bild in der Warteschlange eine niedrigste Priorität hat und in der Warteschlange kein Bild mit einer höheren Priorität vorhanden ist. Einem Bild kann beispielsweise dann in der Warteschlange keine niedrigste Priorität zugeordnet sein, wenn das Bild mehrfach in die Vorlage eingefügt wurde und nur einmal aus der Vorlage entfernt wurde. In diesem Fall ist das entfernte Bild mindestens noch einmal in der Vorlage vorhanden, sodass die Übertragung zumindest für dieses eine noch in der Vorlage vorhandene Bild fortgesetzt werden kann.

In einer Ausgestaltung der Erfindung können, nachdem die Gestaltungsphase abgeschlossen ist, übertragene Bilder, welche in der Gestaltungsvorlage nicht mehr enthalten sind, auf der Medienerfassungseinrichtung gelöscht werden.

**Fig. 4** zeigt anhand eines Beispieles den Aufbau einer Warteschlange sowie die sich verändernden Prioritäten der in die Warteschlange abgelegten Bilder, wenn Bilder einer Vorlage hinzugefügt werden bzw. aus einer Vorlage entfernt werden. Eine Warteschlange 60 kann, wie bereits oben beschrieben, für jedes Bild zusätzlich einen Hashwert und eine Priorität abspeichern. Ebenfalls kann eine Warteschlange zu jedem Bild die Information abspeichern, ob das Bild nur teilweise an die Servereinrichtung übertragen worden ist. Diese Information der teilweisen Übertragung ist in Fig. 4 nicht dargestellt.

In einer Warteschlange 60.1, wie sie beispielsweise in dem Schritt S2 nach Fig. 3 erstellt wird, sind sechs Bilder eingefügt, welche jeweils eine niedrigste Priorität haben. Dieser Zustand der Warteschlange 60.1 kann als Intialzustand bezeichnet werden. Nach Einfügen der Bilder 1 und 3 in die Vorlage wird diesen zwei Bildern eine höhere Priorität, hier Priorität 1 zugewiesen, was in der Warteschlange 60.2 ersichtlich ist. Nach dem erfindungsgemäßen Verfahren würden nunmehr die Bilder 1 und 3 als erste an die Servereinrichtung übertragen werden.

Als nächstes wird wiederum das Bild 1 und das Bild 2 zur Vorlage hinzugefügt. Das Hinzufügen dieser beiden Bilder zur Vorlage bewirkt wiederum, dass sich die Prioritäten der in der Warteschlange abgespeicherten Bilder ändert. Eine so erzeugte Warteschlange ist mit den Bezugszeichen 60.3 gekennzeichnet. Da das Bild 1 bereits zum zweiten Mal der Vorlage hinzugefügt wurde und die Bilder 2 und 3 nur einmal der Vorlage hinzugefügt wurden, erhält das Bild 1 eine höhere Priorität als die Bilder 2 und 3. Das bedeutet, dass in dem Übertragungsprozess das Bild 1 als erstes an die Servereinrichtung übertragen wird. Das ist deswegen vorteilhaft, da ein öfter eingefügtes Bild mit einer größeren Wahrscheinlichkeit auch in dem endgültigen Druckereierzeugnis vorhanden sein wird als nur ein einmal in die Vorlage eingefügtes Bild.

Als nächstes wird das Bild 3 wieder aus der Vorlage entfernt, so dass sich eine geänderte Warteschlange 60.4 ergibt. Die Priorität des Bildes 3 in der Warteschlange wird wieder auf die ursprüngliche bzw. niedrigste Priorität zurückgesetzt. Angenommen, das Bild 3 wäre während des Entfernens des Bildes aus der Vorlage von dem Übertragungsprozess an die Servereinrichtung übertragen worden, hätte die Übertragung des Bilds 3 an dieser Stelle unterbrochen werden können, um die Übertragung mit einem höher priorisierten Bild fortzusetzen.

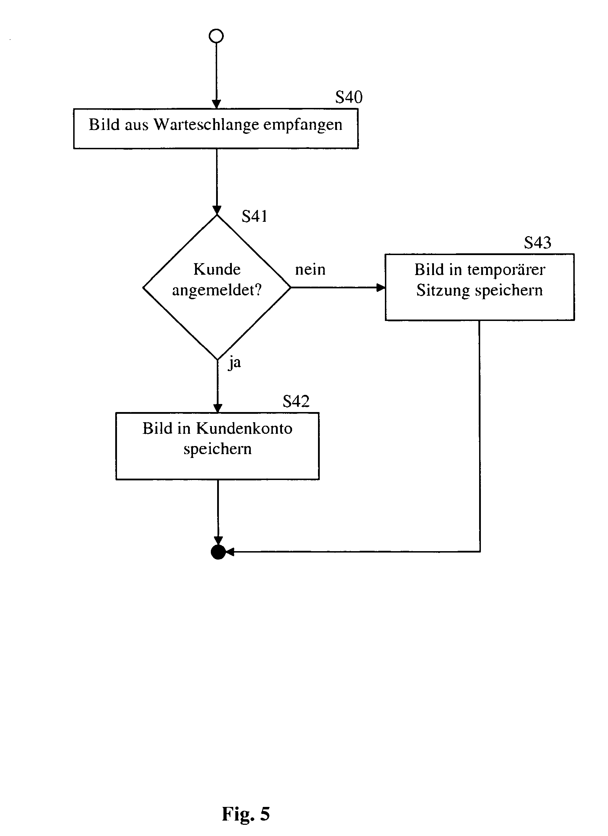

**Fig. 5** zeigt schließlich einen Ablauf einer Servereinrichtung, um ein von dem Computer 20 empfangenes Bild zu speichern.

Zunächst wird in einem Schritt S40 ein Bild aus der Warteschlange von dem Computer 20 empfangen. In einem Überprüfungsschritt S41 wird geprüft, ob der Anwender, von welchem das übertragene Bild empfangen wurde, an der Servereinrichtung als Kunde angemeldet ist. Wenn ja, wird das Bild in dessen Kundenkonto gespeichert Schritt S42. Dies hat den Vorteil, dass der Anwender zu einem späteren Zeitpunkt die Bearbeitung seines Druckereierzeugnisses fortsetzen kann, ohne dass hierfür die bereits übertragenen Bilder nochmals übertragen werden müssten. Ebenso können die bereits übertragenen Bilder für ein weiteres Druckereierzeugnis genutzt werden, ohne dass auch hiefür die bereits übertragenen Bilder noch mal übertragen werden müssten, da eine Verknüpfung der in ein Druckereierzeugnis eingefügten Bilder anhand eines Hashcodes des eingefügten Bildes erfolgt. Ein Bild muss also nur dann übertragen werden, wenn an der Servereinrichtung für diesen Kunden bzw. Anwender nicht bereits ein Bild mit dem entsprechenden Hashcode vorhanden ist.

Ist der Anwender an der Servereinrichtung nicht angemeldet bzw. nicht als Kunde registriert, können die übertragenen Bilder in einer temporären Sitzung auf der Servereinrichtung gespeichert und solange zur Verfügung gestellt werden bis die Sitzung ausläuft bzw. beendet wird, Schritt S43. Innerhalb der Sitzung kann ein Anwender selbstverständlich ein Kundenkonto eröffnen, so dass die in der temporären Sitzung gespeicherten Bilder dem Kundenkonto zugeordnet werden können und permanent auf der Servereinrichtung gespeichert bleiben.

Die erfindungsgemäßen Verfahren können in Hardware, Firmware, Software oder als Kombination hiervon implementiert werden. Die erfindungsgemäßen Einrichtungen und Verfahren können als Computerprogrammprodukt zur Ausführung durch einen programmierbaren Prozessor bereitgestellt werden. Die Schritte der erfindungsgemäßen Verfahren können von einem programmierbaren Prozessor ausgeführt werden, welcher ausgestaltet ist, eine Folge von Instruktionen auszuführen, um Eingabedaten gemäß der Erfindung zu verarbeiten und erfindungsgemäße Ausgabedaten bereitzustellen. Die Erfindung kann in einem oder mehreren Computer-Programmen implementiert werden, welche in einem Computer-System ausführbar sind. Das Computer-System umfasst zumindest einen programmierbaren Prozessor, welcher mit mindestens einer Speichereinrichtung gekoppelt ist, um Daten von der Speichereinrichtung zu empfangen und Daten an die Speichereinrichtung zu senden. Das Computer-System kann auch eine Eingabeeinrichtung und eine Ausgabeeinrichtung umfassen.

Die Computer-Programme können in einer Hochsprache, Assembler oder Maschinencode implementiert sein. Die Computer-Programme können mit prozeduralen, funktionalen, objekt-orientierten oder anderen für die Implementierung der Erfindung geeigneten Programmiersprachen implementiert werden. Für die Ausführung auf einem programmierbaren Prozessor kann der Programmcode kompiliert oder interpretiert werden. Der Programmcode kann vor Ausführung auch in einen Zwischencode übersetzt werden, wobei der Zwischencode durch den programmierbaren Prozessor interpretierbar und/oder ausführbar ist.

Zur Interaktion mit einem Benutzer kann die Erfindung auf einem Computer-System mit einer Anzeigeeinrichtung und einer Eingabeeinrichtung implementiert werden.

## Patentansprüche

1. Verfahren zum Gestalten eines Druckereierzeugnisses aus einer Gestaltungsvorlage (90) und einer Anzahl von Bildern (50), an einer Medieneingabeeinrichtung (20), welche über ein Kommunikationsnetzwerk (30) mit einer Medienerfassungseinrichtung (10) verbindbar ist,
wobei die Gestaltungsvorlage (90) eine Kalendervorlage oder eine Fotobuchvorlage ist,
wobei zum Gestalten des Druckereierzeugnisses Bearbeitungsmittel (70) vorgesehen sind, welche über das Kommunikationsnetzwerk (30) von der Medieneingabeeinrichtung (20) empfangbar sind,
wobei die Bearbeitungsmittel (70) angepasst sind, während zumindest einer Gestaltungsphase zumindest ein Bild aus der Anzahl von Bildern (50) der Gestaltungsvorlage (90) hinzuzufügen und während einer Datenübertragungsphase zumindest ein Bild zumindest teilweise von der Medieneingabeeinrichtung (20) an die Medienerfassungseinrichtung (10) zu übertragen, und
wobei die Datenübertragungsphase vor Beenden der Gestaltungsphase gestartet wird und wobei die Gestaltungsphase und die Datenübertragungsphase im Wesentlichen parallel ablaufen,
**dadurch gekennzeichnet, dass**
eine Warteschlange (60) erzeugt wird, welche die Anzahl von Bildern (50) aufnimmt, wobei das zumindest eine während der Datenübertragungsphase zu übertragende Bild aus der Warteschlange (60) ausgewählt wird, wobei den in die Warteschlange (60) aufgenommenen Bildern eine Priorität zugeordnet wird und wobei aus der Warteschlange (60) ein Bild aus den Bildern mit der höchsten Priorität ausgewählt wird, und
wobei das Hinzufügen eines Bildes aus der Anzahl von Bildern (50) zu der Gestaltungsvorlage (90) eine Erhöhung des Priorität des hinzugefügten Bildes in der Warteschlange (60) bewirkt.

2. Verfahren nach Anspruch 1, wobei ein Entfernen eines Bildes aus der Gestaltungsvorlage (90) eine Veränderung der Priorität des entfernten Bildes in der Warteschlange (60) bewirkt.

3. Verfahren nach einem der vorhergehenden Ansprüche, wobei für jedes zu übertragende Bild vor dem Übertragen eine Identifikation erzeugt wird, welche vor dem Übertragen des Bildes an die Medienerfassungseinrichtung (10) zum Abfragen einer Statusinformation übertragen wird und wobei die Übertragung des Bildes in Abhängigkeit von der Statusinformation durchgeführt wird.

4. Verfahren nach Anspruch 3, wobei die Identifikation ein aus dem Bild erzeugter Hashwert, vorzugsweise ein MD5-Hashwert, ist.

5. Verfahren nach Anspruch 3 oder 4, wobei für jedes der Gestaltungsvorlage (90) hinzugefügte Bild, die Identifikation des Bildes mit der Gestaltungsvorlage (90) verknüpft wird.

6. Verfahren nach Anspruch 5, wobei die Datenübertragungsphase eine Phase zum Übertragen der Gestaltungsvorlage (90) zusammen mit den verknüpften Identifikationen umfasst.

7. Verfahren nach Anspruch 6, wobei während der Gestaltungsphase vorgenommene Änderungen an den der Gestaltungsvorlage (90) hinzugefügten Bildern zusammen mit der Gestaltungsvorlage (90) von der Medieneingabeeinrichtung an die Medienerfassungseinrichtung (10) übertragen werden.

8. Verfahren zum Generieren eines Druckereierzeugnisses aus einer Gestaltungsvorlage (90) und einer Anzahl von Bildern (50'), an einer Medienerfassungseinrichtung (10), welche über ein Kommunikationsnetzwerk (30) mit einer Medieneingabeeinrichtung (20) verbindbar ist, wobei
die Bilder (50') und die Gestaltungsvorlage (90) oder eine Identifikation der Gestaltungsvorlage (90) von der Medieneingabeeinrichtung (20) empfangen werden,
für jedes empfangene Bild eine Identifikation, vorzugsweise ein Hashwert erzeugt wird, wobei der empfangenen Gestaltungsvorlage (90) zumindest eine Identifikation eines Bildes zugeordnet ist,
über die zumindest eine zugeordnete Identifikation ein Bild in die Gestaltungsvorlage (90) eingefügt wird,
Mittel bereit gestellt werden, um von der Medieneingabeeinrichtung (20) zumindest eine Identifikation eines Bildes zu empfangen und eine Statusinformation zu der empfangenen Identifikation an die Medieneingabeeinrichtung (20) zu übertragen, und
Bearbeitungsmittel (70) bereit gestellt werden, welche an die Medieneingabeeinrichtung (20) übertragbar sind und welche ausgestaltet sind, auf der Medieneingabeeinrichtung (20) ein Verfahren nach einem der Ansprüche 1 bis 8 auszuführen.

9. Verfahren nach Anspruch 8, wobei das Druckereierzeugnis (95) an eine Produktionseinrichtung (80) übertragen wird.

10. Computerprogrammprodukt mit Programmcode, welcher, wenn in eine Datenverarbeitungsanlage geladen, das Verfahren gemäß einem der Ansprüche 1 bis 9 zur Ausführung bringt.

## Claims

1. Method for designing a printed product from a designing template (90) and a number of images (50), on a media input device (20), which can be connected with a media detection device (10) via a communication network (30),
whereby the designing template (90) is a calendar template or a photo book template,
whereby for designing the printed product, processing means (70) are provided, which can be received by the media detection device (20) via the communication network (30),
whereby the processing means (70) are adapted to add during at least one designing phase at least one image from the number of images (50) to the designing template (90) and to transfer during a data transfer phase at least one image at least partially from the media input device (20) to the media detection device (10)
and
whereby the data transfer phase is started before completing the designing phase and whereby the designing phase and the data transfer phase run substantially in parallel,
**characterized in that**
a queue (60) is generated which receives the number of images (50), whereby the at least one image to be transferred during the data transfer phase is selected from the queue (60), whereby a priority is assigned to the images received in the queue (60) and whereby an image is selected from the images with the highest priority from the queue (60) and
whereby the adding of an image from the number of images (50) to the designing template (90) causes an increase in the priority of the added image in the queue (60).

2. Method according to claim 1, whereby a removal of an image from the designing template (90) causes a change of the priority of the removed image in the queue (60).

3. Method according to one of the preceding claims, whereby an identification is generated for each image to be transferred before transferring, which identification is transmitted to the media detection device (10) before transferring the image for retrieving a status information and whereby the transfer of the image is carried out depending on the status information.

4. Method according to claim 3, whereby the identification is a hash value generated from the image, preferably a MD5 hash value.

5. Method according to claim 3 or 4, whereby the identification of the image is linked with the designing template (90) for each of the images added to the designing template (90).

6. Method according to claim 5, whereby the data transfer phase comprises a phase for transferring the designing template (90) together with the linked identifications.

7. Method according to claim 6, whereby changes to the images added to the designing template (90) which are carried out during the designing phase are transferred together with the designing template (90) from the media input device to the media detection device (10).

8. Method for generating a printed product from a designing template (90) and a number of images (50') on a media detection device (10), which can be connected with a media input device (20) via a communication network (30), whereby
the images (50') and the designing template (90) or an identification of the designing template (90) are received by the media input device (20),
an identification, preferably a hash value, is generated for each received image, whereby at least one identification of an image is assigned to the received designing template (90),
an image is inserted into the designing template (90) via the at least one assigned identification,
means are made available in order to receive at least one identification of an image from the media input device (20) and to transfer a status information to the received identification to the media input device (20) and
processing means (70) are made available which can be transferred to the media input device (20) and which are configured to carry out on the media input device (20) a method according to one of the claims 1 to 8.

9. Method according to claim 8, whereby the printed product (95) is transferred to a production device (80).

10. Computer program product with program code which executes the method according to one of the claims 1 to 9 when it is loaded in a data processing equipment.

## Revendications

1. Procédé pour concevoir un produit d'imprimerie à partir d'un modèle de conception (90) et d'un nombre d'images (50) sur un dispositif d'entrée de média (20) qui peut être relié à un dispositif de détection de média (10) par un réseau de communication (30),
le modèle de conception (90) étant un modèle de calendrier ou un modèle de livre photo,
des moyens de traitement (70), qui peuvent être reçus par le dispositif d'entrée de média (20) en passant par le réseau de communication (30) étant prévus pour concevoir le produit d'imprimerie,
les moyens de traitement (70) étant adaptés pour ajouter au moins une image du nombre d'images (50) au modèle de conception (90) pendant au moins une phase de conception et pour transmettre au moins une image au moins partiellement du dispositif d'entrée de média (20) au dispositif de détection de média (10) pendant une phase de transmission de données et
la phase de transmission de données étant démarrée avant l'achèvement de la phase de conception et la phase de conception et la phase de transmission de données se déroulant de manière substantiellement parallèle,
**caractérisé en ce**
**qu'**une file d'attente (60) qui recueille le nombre d'images (50) est générée, l'image qui existe au moins qui doit être transmise pendant la phase de transmission de données étant sélectionnée dans la file d'attente (60), une priorité étant assignée aux images recueillies dans la file d'attente (60) et une image étant sélectionnée parmi les images avec la plus haute priorité dans la file d'attente (60) et
l'ajout d'une image du nombre d'images (50) au modèle de conception (90) provoquant une augmentation de la priorité de l'image ajoutée dans la file d'attente (60).

2. Procédé selon la revendication 1, l'enlèvement d'une image du modèle de conception (90) provoquant un changement de la priorité de l'image enlevée dans la file d'attente (60).

3. Procédé selon l'une des revendications précédentes, une identification étant générée avant la transmission pour chaque image à transmettre, identification qui est transmise avant la transmission de l'image au dispositif de détection de média (10) pour demander une information d'état et la transmission de l'image étant effectuée en fonction de l'information d'état.

4. Procédé selon la revendication 3, l'identification étant une valeur de hachage générée à partir de l'image, de préférence une valeur de hachage MD5.

5. Procédé selon la revendication 3 ou 4, l'identification de l'image étant enchaînée au modèle de conception (90) pour chaque image ajoutée au modèle de conception (90).

6. Procédé selon la revendication 5, la phase de transmission de données comprenant une phase pour la transmission du modèle de conception (90) avec les identifications enchaînées.

7. Procédé selon la revendication 6, des changements effectués pendant la phase de conception sur les images ajoutées au modèle de conception (90) étant transmis avec le modèle de conception (90) par le dispositif d'entrée de média au dispositif de détection de média (10).

8. Procédé pour générer un produit d'imprimerie à partir d'un modèle de conception (90) et d'un nombre d'images (50') sur un dispositif de détection de média (10) qui peut être relié à un dispositif d'entrée de média (20) par un réseau de communication (30),
les images (50') et le modèle de conception (90) ou une identification du modèle de conception (90) étant reçus par le dispositif d'entrée de média (20),
une identification, de préférence une valeur de hachage, étant générée pour chaque image reçue, au moins une identification d'une image étant associée au modèle de conception reçu (90),
une image étant insérée dans le modèle de conception (90) par l'identification associée qui existe au moins,
des moyens étant mis à disposition pour recevoir du dispositif d'entrée de média (20) au moins une identification d'une image et pour transmettre une information de statut pour l'identification reçue au dispositif d'entrée de média (20) et
des moyens de traitement (70) étant mis à disposition qui peuvent être transmis au dispositif d'entrée de média (20) et qui sont conçus pour exécuter sur le dispositif d'entrée de média (20) un procédé selon l'une des revendications 1 à 8.

9. Procédé selon la revendication 8, le produit d'imprimerie (95) étant transmis à un dispositif de production (80).

10. Produit programme d'ordinateur avec code de programme qui, lorsqu'il est chargé dans une installation de traitement de données, fait exécuter le procédé selon l'une des revendications 1 à 9.
